# EUROPÄISCHE PATENTSCHRIFT

(11) **EP 0 824 833 B1**
(45) Veröffentlichungstag und Bekanntmachung des Hinweises auf die Patenterteilung: **17.07.2002**
(21) Anmeldenummer: 96911913.0
(22) Anmeldetag: 24.04.1996
(51) Int. Cl.: H04Q 7/24

(54) **VERFAHREN ZUR DATENÜBERTRAGUNG ÜBER EIN KOMMUNIKATIONSNETZ**
PROCESS FOR TRANSMITTING DATA IN A COMMUNICATION NET
PROCEDE DE TRANSMISSION DE DONNEES DANS UN RESEAU DE COMMUNICATION

(30) Priorität: 05.05.1995 DE 19516078
(43) Veröffentlichungstag der Anmeldung: 25.02.1998
(73) Patentinhaber: ROBERT BOSCH GMBH, 70442 Stuttgart (DE)
(72) Erfinder: MÜLLER, Jörg-Martin, D-71409 Schwaikheim (DE); WÄCHTER, Bertram, D-71573 Allmersbach (DE)
(86) Internationale Anmeldenummer: DE9600713
(87) Internationale Veröffentlichungsnummer: WO9635299

(56) Entgegenhaltungen:
- EP-A- 0 332 345
- EP-A- 0 605 311
- IEICE TRANSACTIONS ON FUNDAMENTALS OF ELECTRONICS, COMMUNICATIONS AND COMPUTER SCIENCES, Bd. E75-A, Nr. 12, Dezember 1992, TOKYO, JP, Seiten 1702-1709, XP000339157 MASAMI YABUSAKI ET AL: "VOICE COMMUNICATION CONNECTION CONTROL IN DIGITAL PUBLIC LAND MOBILE NETWORKS"
- PROCEEDINGS OF THE VEHICULAR TECHNOLOGY CONFERENCE, CHICAGO, US, JULY 25 - 28, 1995, Bd. 1, Seiten 301-305, XP000550183 SATOH T ET AL: "TDMA HALF-RATE DIGITAL CELLULAR SYSTEM BASED ON PDC STANDARD IN JAPAN"

## Beschreibung

Die Erfindung betrifft ein Verfahren zur Übertragung von Daten, insbesondere GSM-Daten zwischen mindestens zwei Teilnehmern über ein Kommunikationsnetz gemäß dem Oberbegriff des Patentanspruchs 1. Ein solches Verfahren ist im Prinzip aus EP-A-0332345 bekannt.

### Stand der Technik

Bei bisherigen GSM-Datenverbindungen, insbesondere für digitalisierte Sprachdaten, zwischen mobilen Teilnehmern über ein Kommunikationsnetz, beispielsweise das öffentliche Fernsprechnetz (PSTN-Public Switched Telephone Network), wurden die GSM-Daten im GSM-Format in das Rahmenformat des Kommunikationsnetzes - 64 kbit/s PCM bei PSTN - mittels eines Transcoders umgesetzt. Eine solche Transcodierung erfolgt beim Mobilfunksystem DMCS 900 in den Basisstationen bzw. an der A-Schnittstelle beim Übergang auf das PSTN-Kommunikationsnetz. Nach der GSM-Recommendation 0860/0861 erfolgt die digitale Sprachübertragung in sogenannten "TRAUframes (transcode and rate adaptor unit)"; d. h. Übertragungsrahmen im 16 kbit/s-Format bei FR (Full Rate) Übertragung und 8 kbit/s oder auch 16 kbit/s bei HR (Half Rate) Übertragung.

Aus der EP-A-0 332 345 ist eine Umcodierungseinrichtung zwischen zwei Teilnehmerstationen eines Fernsprechnetzes bekannt. Es wird dort überprüft, ob die von einem sendenden Teilnehmer zu übertragenden Daten in einem vorgegebenen Rahmenformat vorliegen. Wenn das vorgegebene Rahmenformat erkannt wurde, werden die zu übertragenden Daten bei Übereinstimmung der Codierraten transparent durchgeschaltet. Bei Nichtübereinstimmung der Codierraten wird auf die jeweils andere Codierrate umcodiert.

Die EP-A-0 605 311 zeigt Transcodiereinrichtungen, die jeweils zwischen Teilnehmern und Kommunikationsnetz angeordnet sind und der Anpassung des vom Teilnehmer verwendeten Formats an das im Kommunikationsnetz verwendete Format dienen. Diese Transcodiereinrichtung befindet sich hierbei immer in der Nachbarschaft jener Teilnehmer, die ein erstes Übertragungsformat benutzen. Dabei werden die Transcodiereinrichtungen nur dann aktiviert, wenn das vom Teilnehmer verwendete Format nicht dem im Kommunikationsnetz verwendeten Format entspricht.

### Vorteile der Erfindung

Der vorliegenden Erfindung liegt die Aufgabe zugrunde, ausgehend vom Verfahren gemäß dem Oberbegriff des Patentanspruchs 1, ein Verfahren zur Übertragung von Daten anzugeben, bei dem die durch die Transcodierung eintretende Verschlechterung der Sprachqualität vermieden wird, und das ohne Erhöhung der Komplexität vorhandener Transcodiereinrichtungen impliziert werden kann. Mit den Maßnahmen gemäß Anspruch 1 ergibt sich insbesondere bei einer Sprachübertragung von einem mobilen Teilnehmer zu einem anderen mobilen Teilnehmer eine Verbesserung der Sprachqualität im GSM-Netz, insbesondere in D1-Netzen. Außerdem wird für die Übertragung im Kommunikationsnetz - PSTN-Netz - ein einheitliches Format (vorgegebenes TRAU-Rahmenformat) verwendet, gleichgültig ob die Daten/Sprache mit unterschiedlichen Codierraten - Full-Rate und/oder Half-Rate - übertragen wurden/wurde. Durch das einheitliche Format ergibt sich der Vorteil, daß der "Uplink" (Senderichtung) völlig vom "Downlink" (Empfangsrichtung) getrennt ist. Auch diskontinuierlicher Übertragungsbetrieb (DTX) ist ohne Schwierigkeiten möglich. Beim Handover während einer Verbindung zwischen den mobilen Teilnehmern entstehen keine Probleme.

### Zeichnung

Ausführungsbeispiele der Erfindung sind in den Zeichnungen dargestellt. Es zeigen Figur 1 eine transcoderfreie Übertragung mit gleichem Kompressionsschema für den Uplinkund Downlink, Figur 2 das Rahmenformat für die Übertragung im Kommunikationsnetz, Figur 3 eine transcoderfreie Übertragung mit unterschiedlichem Kompressionsschema für Uplink und Downlink, Figur 4 eine transcoderfreie Übertragung mit DTX-Betrieb und Figur 5 ein Flußdiagramm zum Ablauf des Verfahrens nach der Erfindung.

### Beschreibung der Ausführungsbeispiele

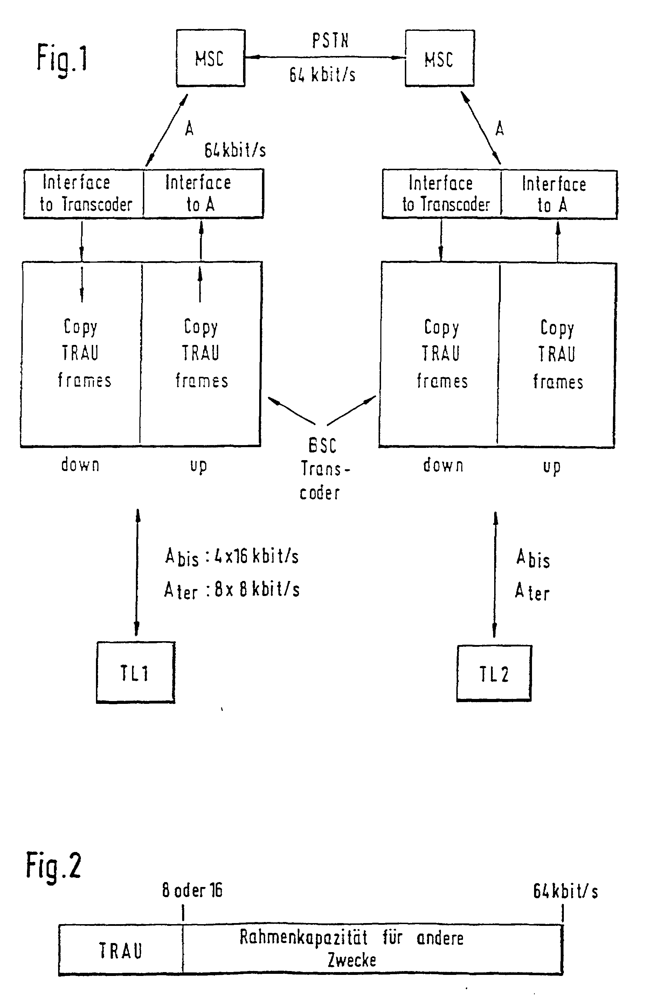

Im bestehenden GSM-Netz (Festnetzseite), beispielsweise dem DMCS 900 Netz, wird eine Transcodierung, d. h. eine Umcodierung der Sprachdaten vom vorgegebenen sogenannten TRAU (Transcode and Rate Adaptor Unit)-Format in das Übertragungsformat des Kommunikationsnetzes, z. B. dem öffentlichen Fernsprechnetz PSTN, stets vorgenommen. Während das vorgegebene TRAU-Rahmenformat eine Übertragungsrate von 16 kbit/s verwendet, wenn die Sprachdaten im FR (Full Rate-Mode) übertragen werden, ist die Übertragungsrate im PSTN-Netz 64 kbit/s. Beim HR (Half Rate-Mode) beträgt die Übertragungsrate 8 kbit/s oder auch 16 kbit/s. Auch andere Übertragungsraten der Form l/n sind prinzipiell möglich, n ist hierbei eine natürliche Zahl. Figur 1 zeigt das Übertragungsschema zwischen mobilen Teilnehmern Tl1 und Tl2 für Sende- und Empfangsbetrieb, wobei für den Uplink und den Downlink das gleiche Kompressionsschema verwendet wird. Von einem mobilen Teilnehmer, z. B. Tl1 werden die Sprachdaten zu einer Basisstation gesendet. Diese Basisstation weist eine Transcodiereinrichtung - BSC Transcoder - auf, deren Eingangsschnittstelle in Richtung Teilnehmer Tl1 mit A_{bis} bzw. Aₜₑᵣ bezeichnet ist. A_{bis} ist die Konfiguration für den FR-Mode: 4 x 16 kbit/s. Aₜₑᵣ gibt die Konfiguration für den HR-Mode an: 8 x 8 kbit/s. Die Schnittstelle zur Mobilfunkvermittlungsstelle MSC (Mobile Services Switching Center) ist mit A bezeichnet. An der A-Schnittstelle liegen die Sprachdaten bereits im 64 kbit/s Rahmenformat an. Die Übertragung der Sprachdaten von einer MSC zu einer weiteren MSC erfolgt über das PSTN-Netz mit dem Rahmenformat von 64 kbit/s. Figur 2 zeigt das Rahmenformat für 64 kbit/s und die Einbindung eines TRAU-Rahmens mit 8 bzw. 16 kbit/s, je nach Codierrate/Kompression. Im folgenden wird angenommen, daß für einen Verbindungsaufbau zwischen den mobilen Teilnehmern Tl1 und Tl2 signalisiert wird, ob transcoderfreier Betrieb möglich ist oder nicht. Dazu wird überprüft, ob die von dem sendenden Teilnehmer Tl1 zu übertragenden Sprachdaten im vorgegebenen TRAU-Rahmenformat vorliegen. Wenn das vorgegebene Rahmenformat erkannt wurde, werden die zu übertragenden Sprachdaten unter Beibehaltung des vorgegebenen Rahmenformats transparent durchgeschaltet; d. h. die TRAU-Rahmen, die am A_{bis}-Interface empfangen wurden, werden zum 64 kbit/s A-Interface kopiert; d. h. unverändert in das PSTN-Rahmenformat eingesetzt (Figur 1: Copy TRAU frames). Da FR-TRAU-Rahmen nur 16 kbit/s benötigen und HR-TRAU-Rahmen beispielsweise nur 8 kbit/s, verbleibt noch ausreichend Rahmenkapazität für andere Zwecke, z. B. zur Übertragung von Signalisierinformation und/oder Übertragung weiterer Daten über den gleichen Übertragungsweg innerhalb des PSTN-Netzes. Beispielsweise können Sprachdaten mehrerer verschiedener Übertragungskanäle in den PSTN-Rahmen gemultiplext werden. Beim Ausführungsbeispiel gemäß Figur 1 weisen Uplink und Downlink das gleiche Kompressionsschema auf (HR oder FR). In diesem Falle können die von Tl1 gesendeten Sprachdaten beim BSC-Transcoder im Downlink ebenfalls vom A-Interface zum A_{bis} bzw. Aₜₑᵣ-Interface kopiert werden.

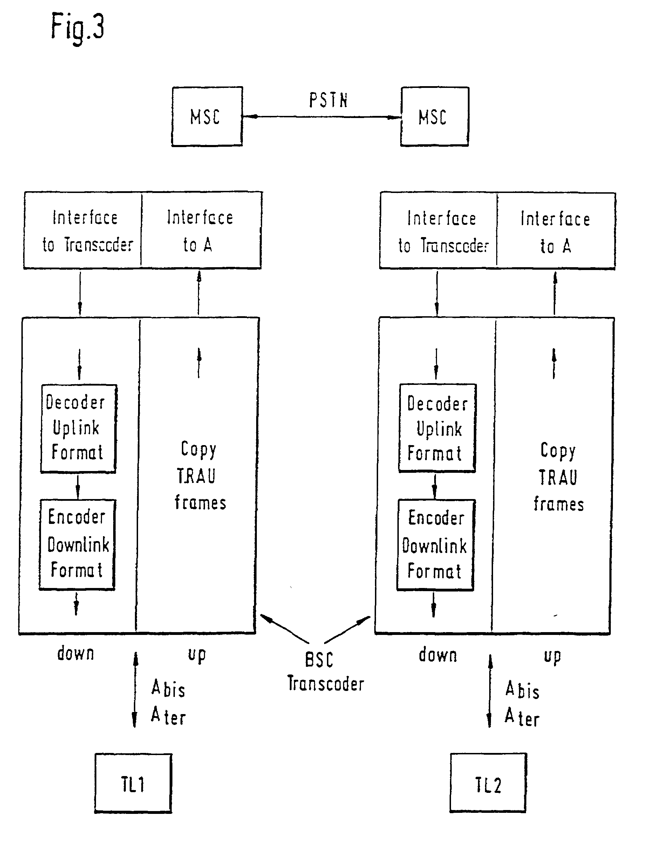

Wenn Uplink und Downlink verschiedene Kompressionsschema/Codierraten aufweisen, ist eine Umcodierung notwendig. Für diesen Fall gibt es zwei Möglichkeiten, von denen eine in Figur 3 dargestellt ist. Die erste Möglichkeit besteht darin, die Daten im Uplink zu decodieren (mit dem Uplink Kompressionsschema), ein PCM-Signal zu übertragen und im Downlink zu codieren (mit dem Downlink Kompressionsschema). Für diese Vorgehensweise gibt es zwei entscheidende Nachteile: Erstens wird das Übertragungsverfahren im PSTN-Netz ständig zwischen TRAU-Format und PCM-Übertragung gewechselt, zweitens ist eine Signalisierung notwendig, da der Uplink-Transcoder in jedem Augenblick Kenntnis davon haben muß, ob der Downlink nach dem gleichen Übertragungsverfahren arbeitet. Dies ist insbesondere dadurch kritisch, daß jederzeit ein Handover zu einem anderen Kompressionsschema erfolgen kann. Erfindungsgemäß wird daher auch bei unterschiedlicher Codierrate im Uplink und Downlink für die Übertragung das TRAU-Rahmenformat beibehalten. Sowohl die Decodierung mit dem Kompressionsschema im Uplink als auch die Codierung mit dem Kompressionsschema im Downlink erfolgt vorteilhafterweise nur im Downlink, d. h. auf der Strecke zwischen Kommunikationsnetz PSTN und empfangendem Teilnehmer Tl2. In der Ausgestaltung nach Figur 3 befinden sich Decoder und Encoder jeweils im Downlinkpfad des BSC-Transcoders. Für den Uplink können die TRAU-Rahmen jeweils von den A_{bis} bzw. Aₜₑᵣ-Schnittstellen zu den A-Schnittstellen kopiert werden. Der Vorteil dieses Konzepts liegt darin, daß Uplink und Downlink völlig voneinander getrennt sind. Der Downlinktranscoder muß nur das über das Interface von der A-Schnittstelle empfangene TRAU-Rahmenformat identifizieren und es mit dem Format vergleichen, das gerade auf seinem Downlink verwendet wird. Wenn das Rahmenformat das gleiche ist, arbeitet der Transcoder im transparenten Modus, d. h. es erfolgt eine unveränderte Durchschaltung, andernfalls erfolgt eine Umcodierung: Codierung im Format des Uplink/Decodierung im Format des Downlink.

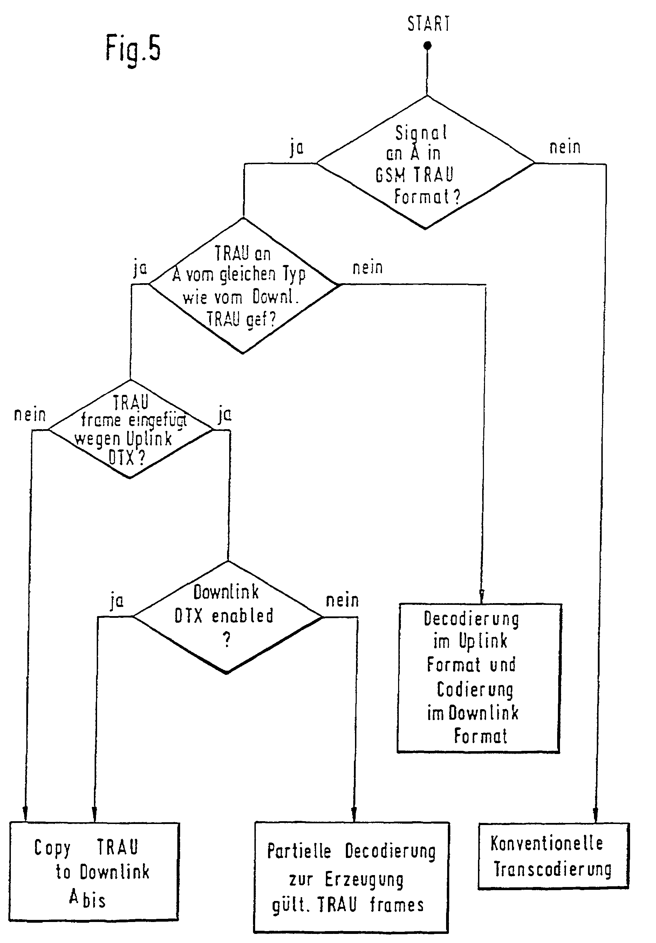

Wenn nicht alle vorhandenen Transcoder im GSM-Netz gleichzeitig mit den Maßnahmen nach der Erfindung ausgerüstet werden können, muß das Handover zu einer Transcodiereinrichtung, die die transcoderfreie Durchschaltung/Codierratenwandlung nicht unterstützt, sichergestellt werden. Eine mögliche Lösung hierzu wird nun vorgestellt: Ein herkömmlicher Transcoder, der die transcoderfreie Übertragung von einem mobilen Teilnehmer zu einem anderen mobilen Teilnehmer (MMC = Mobile to Mobile Communication) nicht unterstützt, interpretiert die TRAU-Rahmen als gültige Rahmen für Sprachdaten, was von seiten der subjektiven Sprachqualität äußerst nachteilig ist, und überträgt ein PCM-Signal, das nichts mit der regelmäßigen Struktur eines TRAU-Rahmens gemeinsam hat. Ein nach der Erfindung konzipierter Transcoder, der die transcoderfreie MMC-Übertragung unterstützt, weist eine Auswerteeinheit auf, die detektieren kann, ob ein PCM-Signal oder ein TRAU-Rahmen gesendet wurde. Im Falle eines detektierten PCM-Signals, beispielsweise von einer Feststation, wird automatisch auf PCM-Übertragung umgeschaltet (Figur 5).

Im Falle eines diskontinuierlichen Übertragung (DTX) werden Sprachdatenrahmen nur gelegentlich übertragen, z. B. zweibis viermal pro Sekunde. Die fehlenden Sprachdatenrahmen werden im Decoder der Transcodiereinrichtung eingefügt. Eine einfache Wiederholung ausgelassener Rahmen führt zu einer schlechten Sprachqualität. Die fehlenden Sprachparameter müssen durch Interpolationsverfahren bestimmt werden, was eine partielle Signaldecodierung erfordert. Gleiches gilt für Fehlerkorrekturverfahren im Falle unkorrigierter Übertragungsfehler oder unzuverlässig detektierter Informationsbits.

Bei der DTX-Übertragung können folgende Fälle auftreten:
- DTX enabled im Uplink und Downlink,
- DTX disabled im Uplink und Downlink,
- DTX disabled im Uplink und enabled im Downlink,
- DTX enabled im Uplink und disabled im Downlink.

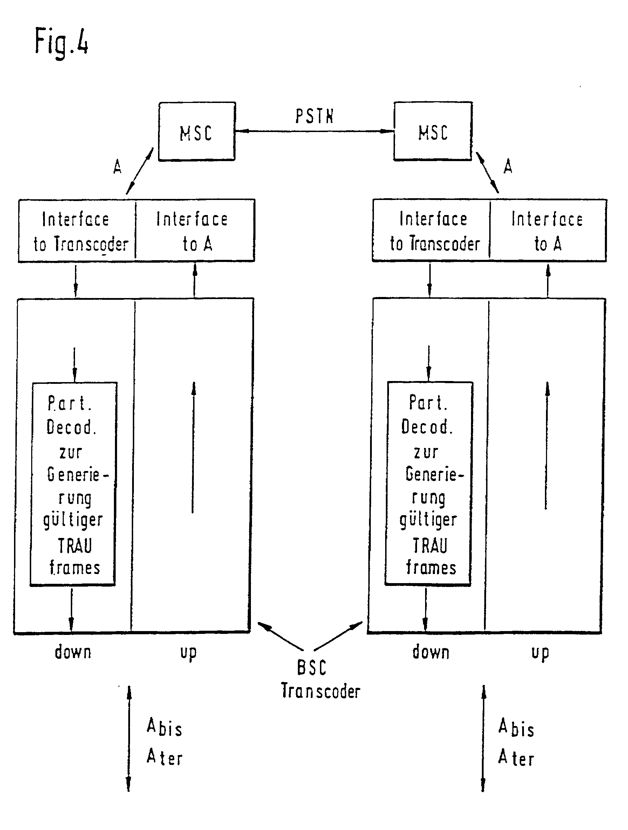

Die ersten drei Fallgestaltungen führen zu keinen Problemen bezüglich der bisher anhand von Figur 1 und Figur 3 erläuterten Übertragungsverfahren. Wenn DTX im Uplink enabled ist, fügt der Uplinktranscoder die fehlenden TRAU-Rahmen ein und markiert sie als eingefügt. Wenn DTX im Downlink auch enabled ist, werden die eingefügten TRAU-Rahmen unterdrückt im Downlink DTX Handler.
Bei der letzten Fallgestaltung müssen gültige Sprachdatenrahmen generiert werden (Fig. 4), da im Downlink keine DTX-Übertragung vorgesehen ist. Wenn die Kompressionsschema verschieden voneinander sind, wird eine Umcodierung wie zuvor beschrieben ausgeführt. Wenn jedoch das gleiche Kompressionsschema benutzt wird, muß im Decoder des Downlinktranscoders eine partielle Decodierung ausgeführt werden (Fig. 4), um gültige TRAU-Rahmen zu generieren.

Figur 5 zeigt alle zuvor behandelten Verfahrensschritte in einer Übersicht, die beispielsweise im Interface zum Transcoder ausgeführt werden.

## Patentansprüche

1. Verfahren zur Übertragung von Daten, insbesondere GSM-Daten, zwischen mindestens zwei Teilnehmern (Tl1,Tl2) über ein Kommunikationsnetz (PSTN) mit folgenden Schritten:
- es wird überprüft, ob die von einem sendenden Teilnehmer (Tl1) zu übertragenden Daten in einem vorgegebenen Rahmenformat (TRAU) vorliegen,
- wenn das vorgegebene Rahmenformat erkannt wurde, werden die zu übertragenden Daten:
a) bei Übereinstimmung der Codierraten von sendendem und empfangendem Teilnehmer unter Beibehaltung des vorgegebenen Rahmenformats transparent durchgeschaltet,
b) bei Nichtübereinstimmung der Codierraten ebenfalls unter Beibehaltung des vorgegebenen Rahmenformats (TRAU) auf die jeweils andere Codierrate umcodiert,
**dadurch gekennzeichnet, daß**:
c) bei Nichtübereinstimmung der Codierraten für die Umcodierung zunächst eine Decodierung für die sendeseitig verwendete Kompression vorgenommen wird und anschließend eine Codierung für die empfangsseitig verwendete Kompression,
d) die Umcodierung jeweils nur auf der Strecke zwischen Kommunikationsnetz (PSTN) und empfangendem Teilnehmer (Tl2), beispielsweise in einer Basisstation, vorgenommen wird.

2. Verfahren nach Anspruch 1, **dadurch gekennzeichnet, daß** für die transparente Durchschaltung die Daten im vorgegebenen Rahmenformat (TRAU) in das Rahmenformat des Kommunikationsnetzes (PSTN) unverändert eingesetzt werden.

3. Verfahren nach Anspruch 2, **dadurch gekennzeichnet, daß** für das vorgegebene Rahmenformat (TRAU) im Falle einer Kompression mit dem Faktor 1 (FR-TRAU) ein Rahmen für eine Übertragungsrate von 16 kbit/s verwendet wird und für das Kommunikationsnetz (PSTN) ein Rahmen von 64 kbit/s und daß für eine Kompression mit einem vom Faktor 1 abweichenden Wert jeweils nur ein Wert von l/n bezogen auf die Übertragungsrate gewählt wird, wobei n eine natürliche Zahl ist.

4. Verfahren nach einem der Ansprüche 1 bis 3, dadurch gekenneichnet, daß die bei der Umcodierung oder bei der transparenten Durchschaltung im Übertragungsrahmen des Kommunikationsnetzes (PSTN) verbleibende Rahmenkapazität zur Übertragung von Signalisierinformation und/oder für die Übertragung weiterer Daten über den gleichen Übertragungsweg innerhalb des Kommunikationsnetzes (PSTN) genutzt wird.

5. Verfahren nach Anspruch 4, **dadurch gekennzeichnet, daß** in den Rahmen des Kommunikationsnetzes (PSTN) Daten mehrerer verschiedener Übertragungskanäle gemultiplext werden.

6. Verfahren nach einem der Ansprüche 1 bis 5, **dadurch gekennzeichnet, daß** in einer Auswerteeinheit, die einer Transcodiereinrichtung (TCE) auf dem Übertragungsweg zwischen mindestens zwei Teilnehmern (Tl1,Tl2) beigeordnet ist, detektiert wird, ob Daten im vorgegebenen Rahmenformat (TRAU) oder als PCM-Signal vorliegen, und daß bei Vorliegen eines PCM-Signals anstelle des vorgegebenen Rahmenformats (TRAU) eine Übertragung im herkömmlichen Transcodiermodus vorgenommen wird.

7. Verfahren nach einem der Ansprüche 1 bis 6, **dadurch gekennzeichnet, daß** im Falle einer vom sendenden Teilnehmer ausgehenden diskontinuierlichen Übertragung (DTX) fehlende Rahmen im vorgegebenen Rahmenformat (TRAU) eingefügt und als solche markiert werden.

8. Verfahren nach Anspruch 7, **dadurch gekennzeichnet, daß** im Fall einer diskontinuierlichen Übertragung auf der Empfangsseite die eingefügten und markierten Rahmen unterdrückt werden und daß im Falle einer kontinuierlichen Übertragung auf der Empfangsseite und einer Übereinstimmung der sende- und empfangsseitigen Codierraten eine partielle Decodierung dahingehend durchgeführt wird, daß gültige Rahmen im vorgegebenen Rahmenformat (TRAU) generiert werden.

## Claims

1. A method of transmitting data, in particular GSM data, between at least two subscribers (Tl1, Tl2) over a communications network (PSTN) having the following steps:
- it is checked whether the data to be transmitted by a transmitting subscriber (Tl1) is present in a predefined frame format (TRAU),
- if the predefined frame format has been detected, the data to be transmitted:
a) is connected through transparently if the coding rates of the transmitting and receiving subscribers correspond while maintaining the predefined frame format,
b) given non-correspondence of the coding rates, is recoded to the respective other coding rate, also while maintaining the predefined frame format (TRAU),
**characterized in that**
c) given non-correspondence of the coding rates for the recoding, firstly decoding for the compression used at the transmit end is performed and subsequently coding for the compression used at the receive end,
d) the recoding is performed in each case only on the path between the communications network (PSTN) and receiving subscriber (T12), for example in a base station.

2. Method according to Claim 1, **characterized in that** for the transparent connecting through, the data in the predefined frame format (TRAU) are inserted without being changed into the frame format of the communications network (PSTN).

3. Method according to Claim 2, **characterized in that** for the predefined frame format (TRAU) in the case of a compression by the factor 1 (FR-TRAU) a frame for a transmission rate of 16 kbit/s is used, and for the communications network (PSTN) a frame of 64 kbit/s is used, and **in that** for a compression by a value deviating from the factor 1 in each case just one value of 1/n referred to the transmission rate is selected, n being a natural number.

4. Method according to one of Claims 1 to 3, **characterized in that** the frame capacity remaining in the transmission frame of the communications network (PSTN) when the recoding or the transparent connection through occurs is used for transmitting signalling information and/or for transmitting further data over the same transmission path within the communications network (PSTN).

5. Method according to Claim 4, **characterized in that** data items of a plurality of different transmission channels are multiplexed into the frame of the communications network (PSTN).

6. Method according to one of Claims 1 to 5, **characterized in that** in an evaluation unit which is arranged alongside a transcoding device (TCE) on the transmission path between at least two subscribers (T11, T12), it is detected whether data is present in the predefined frame format (TRAU) or as a PCM signal, and **in that** when a PCM signal is present, transmission is performed in the conventional transcoding mode instead of the predefined frame format (TRAU).

7. Method according to one of Claims 1 to 6, **characterized in that** in the case of a discontinuous transmission (DTX) which starts from the transmitting subscriber, absent frames are inserted in the predefined frame format (TRAU) and marked as such.

8. Method according to Claim 7, **characterized in that** in the case of a discontinuous transmission at the receive end the inserted and marked frames are suppressed, and in the case of a continuous transmission at the receive end and correspondence between the transmit-end and receive-end coding rates partial decoding is carried out to the effect that valid frames are generated in the predefined frame format (TRAU).

## Revendications

1. Procédé de transmission de données notamment de données GSM entre au moins deux participants (Tl1, Tl2) par un réseau de communication (PSTN) et comprenant les étapes suivantes :
- on vérifie si les données transmises par l'un des participants (Tl1) existent dans un format de trame donné (TRAU),
- si le format de trame prédéfini est reconnu, les données à transmettre :
a) sont transmises en transparence en cas de concordance des taux de codage du participant émetteur et du participant récepteur en conservant le format de trame prédéfini,
b) en cas de non concordance des taux de codage également en conservant le format de trame prédéfini (TRAU) sont transformées par codage chaque fois sur un autre taux de codage,
**caractérisé en ce que**
c) en cas de non concordance des taux de codage pour le transcodage on effectue tout d'abord un décodage de la compression utilisée du côté de l'émission, et ensuite un codage pour la compression utilisée du côté de la réception, ou
d) on effectue le transcodage chaque fois seulement sur le chemin entre le réseau de communication (PSTN) et le participant récepteur (Tl2) par exemple dans une station de base.

2. Procédé selon la revendication 1,
**caractérisé en ce que**
pour la transmission en transparence les données dans le format de trame (TRAU) prédéfini sont introduites sans modification dans le format de trame du réseau de communication (PSTN).

3. Procédé selon la revendication 2,
**caractérisé en ce que**
pour le format de trame prédéfini (TRAU), dans le cas d'une compression avec le coefficient 1 (FR-TRAU) on utilise une trame pour un débit de transmission de 16 kbits/s, et pour le réseau de communication (PSTN) on utilise une trame de 64 kbits/s, et pour une compression avec une valeur différente du coefficient 1, on sélectionne chaque fois seulement une valeur parmi l/n rapportée à la vitesse de transmission, n étant un nombre naturel.

4. Procédé selon l'une quelconque des revendications 1 à 3,
**caractérisé en ce que**
la capacité de trame qui subsiste au transcodage ou à la transmission en transparence dans les trames de transmission du réseau de communication (PSTN) est utilisée pour transmettre des informations de signalisation et/ou pour la transmission d'autres données par le même chemin de transmission dans le réseau de communication (PSTN).

5. Procédé selon la revendication 4,
**caractérisé en ce que**
dans le cadre du réseau de communication (PSTN) on multiplexe plusieurs canaux de transmission différents.

6. Procédé selon l'une quelconque des revendications 1 à 5,
**caractérisé en ce que**
dans une unité d'exploitation qui est associée à une installation de transcodage (TCE) sur le chemin de transmission entre au moins deux participants (Tl1, Tl2) on détecte si les données existent dans le format de trame prédéfini (TRAU) ou comme signal PCM et
dans le cas d'un signal PCM, à la place du format de trame prédéfini (TRAU) on effectue une transmission dans le mode de transcodage habituel.

7. Procédé selon l'une quelconque des revendications 1 à 6,
**caractérisé en ce que**
dans le cas d'une transmission discontinue (DTX) partant du participant émetteur, les trames manquantes dans le format de trame prédéterminé (TRAU) sont ajoutées et sont marquées en tant que telles.

8. Procédé selon la revendication 7,
**caractérisé en ce que**
dans le cas d'une transmission discontinue, du côté de la réception, on élimine les trames ajoutées et marquées et dans le cas d'une transmission continue, du côté de la réception, et d'une concordance entre les taux de codage du côté de l'émission et du côté de la réception, on effectue un décodage partiel en générant des trames valables dans le format de trame prédéfini (TRAU).
